# EUROPÄISCHE PATENTANMELDUNG

(11) **EP 4 837 739 A1**
(43) Veröffentlichungstag der Anmeldung: **11.11.2026**
(21) Anmeldenummer: 25175436.2
(22) Anmeldetag: 09.05.2025
(51) Int. Cl.: B32B 33/00, B32B 5/02, B32B 5/26, B32B 27/06, B32B 27/08, B32B 27/32, B32B 27/34, B32B 27/36

(54) **VERBUNDFOLIE AUS BIO-KUNSTSTOFF UND WACHSFASERBESCHICHTUNG**

(71) Anmelder: Pertsch Torres Patente GbR, 67059 Ludwigshafen (DE)
(72) Erfinder: Pertsch, Wolfgang, 67059 Ludwigshafen (DE); Torres, Ursula, 67059 Ludwigshafen (DE)
(74) Vertreter: STT Sozietät Thews & Thews

(57) **Zusammenfassung**

Die Erfindung bezieht sich auf eine mindestens zweilagige Verbundfolie (12) bestehend aus:
- einer Basis-Lage (1) aus Bio-Kunststoff und
- mindestens einer Deck-Lage (2), die auf mindestens eine erste Seite (1.1) der Basis-Lage (1) aufgebracht ist,

wobei die mindestens eine Deck-Lage (2) ein Gemisch (3) aus verschiedenen Wachsen (3.2) ist oder
ein Gemisch (3) aus mindestens einem Wachs (3.2) und Pflanzenfasern (3.1) ist, wobei das jeweilige Wachs und/oder der Bio-Kunststoff aus nachwachsenden Rohstoffen besteht und/oder biologisch abbaubar ist.

## Beschreibung

Die Erfindung bezieht sich auf eine mindestens zweilagige Verbundfolie bestehend aus:
- einer Basis-Lage aus Bio-Kunststoff und
- mindestens einer Deck-Lage, die auf mindestens eine erste Seite der Basis-Lage aufgebracht ist.

Zudem betrifft die vorliegende Erfindung Verfahren zur Herstellung einer Verbundfolie und deren Verwendung.

Es ist bereits ein biologisch abbaubarer Kunststoffverbundstoff mit Fasern aus der US 2023/0125125 A1 bekannt. Dabei wird ein Gemisch aus geschmolzenen Polymeren und Fasern mittels Schneckenextruder hegestellt.

Aus der DE 101 04 829 A1 ist die Verwendung von Wachs und Cellulosefasern als Additive in Kunststoffmischungen für die Produktion von mehrschichtigen Polymerfolien bekannt.

Die Herstellung von Aluminiumfolie ist durch den Einsatz zahlreicher Chemikalien und den hohen Energieverbrauch besonders umweltschädlich. Aluminium wird aus dem Erz Bauxit gewonnen, welches aufwendig im Tagebau gefördert wird und mitverantwortlich für die Rodung von Urwäldern ist. Zudem kann Aluminiumfolie nicht biologisch abgebaut werden. Der Gebrauch von Aluminiumfolie, ist gerade dann besonders umweltschädlich, wenn diese nur kurzzeitig gebraucht wird und wenn diese bei Anwendungen Verwendung findet, die eigentlich keine hohe Hitzebeständigkeit erfordern.

Der Erfindung liegt die Aufgabe zugrunde, eine biologisch abbaubare Kunststofffolie derart auszubilden und anzuordnen, dass der Anwendungs- und Einsatzbereich größer wird.

Gelöst wird die Aufgabe erfindungsgemäß dadurch, dass mindestens eine Deck-Lage ein Gemisch aus verschiedenen Wachsen ist oder ein Gemisch (3) aus mindestens einem Wachs und Pflanzenfasern ist, wobei das jeweilige Wachs und/oder der Bio-Kunststoff aus nachwachsenden Rohstoffen besteht und/oder biologisch abbaubar ist.

Erzielt wird dadurch eine bei Raumtemperatur manuell mit geringer Kraft plastisch verformbare Verbundfolie aus biologisch nachwachsenden und biologisch abbaubaren bzw. kompostierbaren Rohstoffen mit ähnlichen physikalischen Eigenschaften und haptischen Parametern wie Aluminiumfolie in Bezug auf Steifigkeit, Verformbarkeit, Bruchdehnung und Knitterfähigkeit. Durch diesen neuen Verbundwerkstoff bzw. diese neue Verbundfolie kann der Einsatz von Aluminiumfolie signifikant reduziert werden.

Die Verbundfolie besteht aus zwei Lagen, die fest miteinander verbunden sind. Die Lagen haben jeweils unterschiedliche Materialeigenschaften. Dies führt zu einem Verbundwerkstoff bzw. einer Verbundfolie mir den neuen gewünschten Materialeigenschaften.

### Basis-Lage:

Vorgesehen ist eine stabile und gut beschichtbare Basis-Lage. Geeignet sind Folien und Vliese aus Bio-Kunststoffen. Wobei der Bio-Kunststoff der Basis-Lage entweder biobasiert auf Basis von nachwachsenden Rohstoffen wie Zuckerrohr, Mais, Holz, Zellulose oder Algen etc. hergestellt wurde und/oder durch Mikroorganismen wie Pilze oder Bakterien zersetzt werden kann. Sich also zu Wasser, Kohlendioxid oder Methan und Biomasse zersetzen lässt und somit biologisch abbaubar ist. Vorzugsweise sollten Bio-Kunststoffe verwendet werden, die biobasiert und zugleich biologisch abbaubar sind.

Wichtig dabei ist eine möglichst geringe Elastizität der Basis-Lage. Geeignete Materialien sind u.a.: Vliese, non-woven mit 15g/qm- 30g/qm oder Folien mit einer Stärke von 20µm - 100µm.

Wichtig bei der Materialwahl der Basis-Lage ist eine bei dem gewählten Flächengewicht bzw. Stärke möglichst geringe Steifigkeit von vorzugsweise weniger als 3 GPa um die spätere plastische Verformbarkeit der Deck-Lage nicht einzuschränken, eine gute Reisfestigkeit von 1 N/mm bis 15 N/mm sowie eine gute Zugfestigkeit zwischen 31 MPa und 52 MPa um die ausreichende Festigkeit des Verbundmaterials sicherzustellen und eine geringe Neigung zu Bruch bei Faltung mit einer Bruchdehnung zwischen 1,3 % und 7 % um Beschädigungen durch Bruch bei der späteren Verwendung des Verbundstoffes einzugrenzen. Das Flächengewicht (Grammatur) der Basis-Lage sollte vorzugsweise zwischen 10 g/qm - 80 g/qm liegen. Die Dicke der Basis-Lage sollte vorzugsweise zwischen 0,02 mm und 0,6 mm liegen.

Geeignete Materialien für die Basis-Lage sind PP oder biobasierte Polyester (PLA, PHA, PET, PTT etc.) oder biobasierte Polyamide (PA 11, PA10-10, etc.). Weitere geeignete Materialien sind Gemische daraus, mithin aus PP und/oder biobasierten Polyestern und/oder biobasierten PA.

Für das Ausgangsmaterial, dass bei der Herstellung von Vliesen Verwendung findet, gelten folgende Referenzwerte (Nature Works Ingeo^{™} Biopolymer 6752D):

| Physikalische Eigenschaften | Wert | STM Method |
|---|---|---|
| Spezifisches Gewicht | 1.24 g/cm³ | D792 |
| Relative Viskosität | 3.3 | CD Internal Viscotek Method |
| Schmelzindex (210°C) | 15 g/10 min | D1238 |
| Schmelzdichte (230°C) | 1.08 g/cm³ | ./. |
| Glasübergangstemperatur | 55-60 °C | D3417 |
| Kristalline Schmelztemperatur | 145-160 °C | D3418. |

Für das Ausgangsmaterial, dass bei der Herstellung von Folien Verwendung findet, gelten folgende Referenzwert (Nature Works Ingeo^{™} Biopolymer 4043D):

| Folieneigenschaften | Wert | ASTM Methode |
|---|---|---|
| Dichte | 1,24 g/cm³ | D1505 |
| Zugfestigkeit (Länge) | 16 kpsi | D882 |
| Zugmodul (Länge) | 480 kpsi | D882 |
| Reißdehnung (Länge) | 160 % | D882 |
| Reißfestigkeit (Länge) | 15 g/mil | D1922 |
| Spencer-Schlagfestigkeit | 2,5 Joule | |
| Schmelzpunkt | 145-160 °C | D3418. |

### Matrix aus Wachs:

Die Deck-Lage ist eine Matrix aus verschiedenen Wachsen oder eine Matrix zusammengesetzt aus einem oder mehreren Wachsen und verschiedenen Pflanzenfasern.

Für die Matrix aus Wachs eignen sich vor allem mikrokristalline Wachse und/oder Wachse, die biologisch abbaubar sind. Wobei das Wachs vorzugsweise nicht aus fossilen Quellen entstammt, sondern rezente (nicht-fossile) tierische und pflanzliche Wachse zum Einsatz kommen sollten. Vorzugsweise gewonnen aus nachwachsenden Rohstoffen wie Sojaöl, Rapsöl, Kokosöl, Rizinusöl, Palmöl, Jojobaöl u.a. oder tierische Wachse wie Wollwachs, Chinawachs, Bienenwachs oder Schellack. So auch Zuckerrohrwachs, Carnaubawachs, Candelillawachs, Korkwachs, Guarumawachs, Quricuriwachs, Bauwollwachs, Reiskleiewachs, Falchswachs oder Myrtewachs. Wobei auch Wachse aus fossilen Quellen (Montanwachse) verwendet werden können.

Für die Matrix aus Wachs werden in der Regel verschiedene Wachse gemischt. Die Mischung der verwendeten Wachse ist so zu wählen, dass diese bezüglich Schmelz- und Erweichungstemperatur für den späteren Einsatzzweck geeignet ist. Zu erzielende typische Referenzwertebereiche für den Schmelzpunkt_Ts bzw. Tropfpunkt der Wachsmischung sind: 65°C <= Ts <= 110°C.

Entscheidend bei der Erstellung der Wachsmischung ist, dass diese bei einer Raumtemperatur von 15°C bis 25°C und bei einer Schichtdicke von 0,1 mm bis 1,0 mm - entsprechend der später gewählten Auftragsdicke der Beschichtung - mit möglichst geringer manueller Kraft entsprechend der E-Modulwerte der Ausgangsmaterialien zwischen 390 MPa und 680 MPa plastisch verformbar und faltbar ist, ohne dass es dabei zu einem Aufbrechen der Wachsschicht kommt. Die Bruchdehnung der Wachsschicht muss bei einer Schichtdicke von 0,1 mm bis 1,0 mm in jedem Fall ausreichend sein, um ein erstes bruchfreies Falten in der jeweiligen gewünschten Schichtdicke zu ermöglichen. Das lässt sich durch einen Bruchdehnungstest ermitteln.

Hartwachse und somit auch Harze, die bei Raumtemperatur keinen plastisch verformbaren Film bei einer Schichtdicke vom 0,1 mm bis 1,0 mm ausbilden können, bzw. beim Verformen bei einer Schichtdicke vom 0,1 mm bis 1,0 mm zu spröde sind und brechen, sind nicht geeignet. Bei der Auswahl der Wachse für die Wachsmischung ist daher zu beachten, dass deren E-Modulwerte 680 MPa nicht überschreiten. Solche Wachse können nur in geringen Mengen bis maximal 10 % zur Optimierung der Eigenschaft der Wachsschicht hinsichtlich einer erhöhtem Temperaturbeständigkeit bzw. zu Erzielung einer erhöhtem Erweichungstemperatur und eines erhöhten Schmelzpunktes der Wachsmischung zugemischt werden.

### Pflanzenfasern:

Zwecks Erhöhung der Festigkeit und der Steifigkeit der Deck-Lage können der Matrix Pflanzenfasern zugemischt. Durch die zugegebenen Pflanzenfasern wird gleichzeitig die plastische Formbarkeit der Wachsmatrix gewährleistet.

Die Pflanzenfasern liegen in unterschiedlichen Längen und Mischungsverhältnissen vor. Generell gilt wie bei Faserverbundwerkstoffen üblich, dass:
- die Bruchdehnung des Matrixwerkstoffs, hier Wachs größer ist als die Bruchdehnung der Fasern, mithin ε_{Bruch, Matrix} > ε_{Bruch, Faser}
- die Bruchfestigkeit der Fasern größer ist als die Bruchfestigkeit des Matrixwerkstoffs, hier Wachs, mithin R_{Faser längs} > R_{Matrix}.

Durch die hohe Bruchdehnung der Wachs-Faser-Matrix kann ein breites Spektrum an Fasern eingesetzt werden. Es eignen sich Holz- und Cellulosefasern, Bambusfasern, Hanffasern, Flachsfasern, Kokosfasern, Sisalfasern, Ramiefasern, Kenaffasern u.a.. Die Auswahl der Fasern sollte sich dabei an folgenden physikalischen Referenzwerten orientieren: Zugfestigkeit ~0,75 GPa, Zug-E-Modul ~9 GPa, Lineare Dehnungsgrenze -10 GPa.

Zur optimalen Spannung- und Lastübertragung zwischen Faser und Matrix müssen die Fasern dabei die kritische Faserlänge_Lc überschreiten. Die Länge_Lc ist die kritische Transferlänge, die erforderlich ist, damit die Grenzflächenschubspannung die Faser bis zur Bruchspannung belastet. Für die Wachs-Faser-Mischung eignen sich Fasern ab einer Mindestlänge von 0,1mm bis 2 mm oder mehr, so dass eine ausreichende Grenzflächenschubspannung aufgebaut werden kann.

Durch die Zugabe der Fasern ändert sich die gemessene Steifigkeit des erkalteten Wachs-Faser-Verbundwerkstoffes und somit der gemessene E-Modul Wert bedeutend. E-Modulwerte bei 20°C:
- Wachsmischung: 600 MPa;
- Wachs-Faser-Mischung: 1800-2800 MPa.
- Angestrebt sind dabei stets E-Modul Werte höher: 2200 MPa.

### Wachs-Faser-Mischung

Die Mischung der Pflanzenfasern mit dem Wachs erfolgt je nach verwendetem Wachs bei Temperaturen ab 70°C bis 120°C stets oberhalb des Erweichungstemperatur der verwendeten Wachsmischung. Zunächst wird die Wachsmatrix erhitzt, dann werden die Fasern nach und nach zugegeben und sind nach gründlichem durchmischen ohne spezifische Ausrichtung in der Matrix verteilt. Dadurch entsteht in der Wachsmatrix eine Fachwerk- oder Gitterstruktur, die ähnlich einem homogenen Werkstoff isotrope Eigenschaften aufweist.

Die Bestimmung des genauen Faservolumenanteils der Mischung erfolgt je nach Faserlänge und Fasertyp. Die Fasern können dabei bis zu einem Faservolumenanteil von 60 % zugegeben werden. Die vollständige Benetzung der Faser mit der Wachsmatrix muss dabei stets gewährleistet sein.

Durch Zugabe der Fasern zum erhitzten Wachs ändert sich dessen Viskosität. Die Viskosität des erhitzten Wachses ohne Zugabe von Fasern liegt bei 500 mPas bei 90°C. Die angestrebte Viskosität nach Zugabe der Fasern liegt bei 2600 mPas bis 3200 mPas bei 90°C.

Die Zugabe von Netz- und Dispergieradditiven zum besseren Durchmischen der Fasern mit dem Wachs sind möglich aber nicht zwingend notwendig. Die Zugabe von Additiven zur Einstellung einer optimalen Viskosität der erhitzten Wachs-Faser-Mischung für den anschließenden Beschichtungsauftrag ist möglich - jedoch nicht zwingend nötig, da die Viskosität auch allein über den Faseranteil gesteuert werden kann.

### Beschichtungsauftrag:

Die Wachs- oder Wachs-Faser-Mischung wird als Deck-Lage über erwärmte Walzen auf die Basis-Lage aufgetragen. Die Dicke der Deck-Lage liegt dabei zwischen 0,05mm und 1,0mm.

Die anschließende Haftung der Deck-Lage auf der Basis-Lage ist rein physikalischer Natur und basiert auf zwischenmolekularen Kräften ebenso wie auf Haltekräften durch Formschlüsse zwischen der Oberfläche der Basis-Lage und dem erstarrten Wachs.

Der Auftrag der Deck-Lage auf der Basis-Lage erfolgt unter Zugabe von Wärme mit Heißleim-Beschichtungsanlagen unter genauer Steuerung der Temperatur. Der Beschichtungsauftrag der Wachs-Faser-Mischung findet mit einer Auftragstemperatur statt, die oberhalb des Schmelzpunktes_Ts des Wachses liegt.

Im Gegensatz zu den Verfahren zur Erzeugung sonst üblicher Verbundstoffen erfolgt der Auftrag der erhitzen Deck-Lage und somit der gesamte Beschichtungsvorgang der Basis-Lage stets mit einer Temperatur unterhalb der Schmelztemperatur Tb und oberhalb der Glasübergangstemperatur_Tg der Basis-Lage. Entsprechend der Referenzwerte des Ausgangsmaterials der Basis-Lage gilt: 145°C <= Tb <= 160 °C und 55°C <= Tg <=60 °C. Ein Auftrag der Deck-Lage über der Glasübergangstemperatur Tg der Basis-Lage führt zu einer optimalen formschlüssigen Haftung der Beschichtung.

Anschließend kommt ein Kalander-Prozess mit einer Temperatur stets kleiner als der Schmelzpunkt_Ts zum Glätten und langsamen, gezielten Abkühlen der Verbundfolie zum Tragen, um mögliche Verformungen der Verbundfolie, verursacht durch die Volumenänderungen des Wachses beim Abkühlen auszuschließen.

Durch ein anschließendes Prägen mit einem flächigem Prägemuster wie Wabenoder Rautenmuster wird die leichte Formbarkeit der Verbundfolie weiter optimiert.

Im Unterschied zu üblichen Verfahren bei der Herstellung von Verbundwerkstoffen erfolgt ein Verpressen nach dem Auftrag der Beschichtung bei Temperaturen über dem Schmelzpunkt Tb der Basis-Lage nicht. Die Beschichtung ist direkt nach dem Auftrag der erhitzen Wachs-Faser-Mischung auf die unbehandelte Basis-Lage und dem anschließenden Abkühlen abgeschlossen.

Die in der Deck-Lage verwendete Wachs-Faser-Mischung hat keinen Kunststoffanteil und ist auch keine extrudierbare Beschichtung. Die Wachs-Faser-Mischung kann somit auch nicht mit klassischen Extrusionsanlagen verarbeitet werden, da es zu einer Aufspaltung von Wachs und Fasern im Extruder kommen würde.

Gelöst wird die Aufgabe auch durch ein Verfahren zur Herstellung der Verbundfolie bei dem ein Gemisch aus verschiedenen Wachsen oder ein Gemisch aus Pflanzenfasern und mindestens einem Wachs hergestellt wird;
eine Basis-Lage aus Bio-Kunststoff mit einer Schmelztemperatur Tb sowie das Gemisch auf eine Auftragstemperatur Ta erhitzt werden, mit Ta < Tb;
die Basis-Lage im erhitzten Zustand mit dem Gemisch im erhitzten Zustand beschichtet wird;
die so hergestellte Verbundfolie unmittelbar nach dem Beschichten abgekühlt wird;
das Herstellungsverfahren der Verbundfolie unmittelbar nach dem Abkühlen abgeschlossen wird.

Gelöst wird die Aufgabe auch durch die Verwendung der Verbundfolie als Schutzhülle, Verpackungsmaterial und als Ersatz von Aluminiumfolie für Waren, wie Lebensmittel, Blumen, Bücher und Hefte und z.B. beim Haare färben.

Ferner kann es vorteilhaft sein, wenn[2] der Bio-Kunststoff ein PP oder ein biobasiertes Polyester, wie PLA, PHA, PET, PTT oder ein biobasiertes Polyamide, wie PA 11, PA10-10 ist. PLA hat sich als Basis-Lage sehr gut bewährt. Insbesondere die Verbindung zur Deck-Lage ist vorteilhaft.

Hierzu kann es vorteilhaft sein, wenn der Bio-Kunststoff als Vlies, als Gitter, als Netz oder als Folie ausgebildet ist. Das gewährleistet eine optimale Beschichtung.

Vorteilhaft kann es hierzu auch sein, wenn[4] die Basis-Lage eine Schmelztemperatur_Tb aufweist und das Wachs bzw. die Deck-Lage einen Schmelzpunkt_Ts aufweist, mit Tb > Ts. Damit wird ein Anschmelzen der Basis-Lage beim Auftragen der Deck-Lage verhindert. Eine Temperatur der Wachs-Faser-Mischung beim Beschichtungsauftrag in Höhe von 110°C sollte nicht überschritten werden bzw. sollte ein Abstand von mindestens 30°C zur Schmelztemperatur_Tb der Basis-Lage eingehalten werden, um eine Beschädigung der Vliesstoffstruktur der Basis-Lage durch thermische Einwirkung bei Auftrag der erhitzten Wachs-Faser-Mischung zu vermeiden.

Vorteilhaft kann es auch sein, wenn die Basis-Lage ergänzend zu der ersten Seite auch auf einer zweiten Seite eine Deck-Lage aufweist. Durch die zweite Deck-Lage werden andere physikalische Eigenschaften der Verbundfolie möglich, insbesondere ein anderes Knitterverhalten.

Dabei kann es vorteilhafterweise vorgesehen sein, wenn mindestens eine weitere Basis-Lage und mindestens eine weitere Deck-Lage vorgesehen sind, wobei zwischen zwei benachbarten Basis-Lagen jeweils eine als Zwischenlage ausgebildete weitere Deck-Lage vorgesehen ist. Der Sandwich-Aufbau ist einfach und schnell zu bewerkstelligen. Entsprechend ist die Verbundfolie an die gewünschten Einsatzzwecke adaptierbar.

Von besonderer Bedeutung kann für die vorliegende Erfindung sein, wenn[7] mindestens eine Außenlage eine Deck-Lage ist. Die Deck-Lage mit Wacks dient zum Schutz der Ware einerseits und zum Schutz der Umgebung andererseits.

Im Zusammenhang mit der erfindungsgemäßen Ausbildung und Anordnung kann es von Vorteil sein, wenn die Deck-Lage eine Dicke von 0,05 mm bis 1 mm oder 0,1 mm bis 1 mm aufweist. Das begünstigt das Knitterverhalten.

Vorteilhaft kann es ferner sein, wenn das jeweilige Wachs ein mikrokristallines Wachs ist und/oder ein biologisch abbaubares Wachs ist und/oder ein natürliches Wachs ist. Der Einsatz solcher Wachse ist nachhaltig.

Außerdem kann es vorteilhaft sein, wenn die Basis-Lage ein spezifisches Gewicht von 10 g bis 80 g pro qm und eine Dicke zwischen 0,02 mm und 0,8 mm oder zwischen 0,05 mm und 0,6 mm oder zwischen 0,02 mm und 0,6 mm aufweist. Damit sind ähnliche physikalische Eigenschaften wie von Alu-Folie gewährleistet.

Ferner kann es vorteilhaft sein, wenn Pflanzenfasern eine Länge von 0,1 mm bis 2 mm aufweisen oder in Ausnahmefällen auch mehr als 2 mm. Die Länge muss größer sein als die kritische Faserlänge_Lc. Somit kann eine ausreichende Grenzflächenschubspannung aufgebaut werden.

Für das Verfahren kann es von Vorteil sein, wenn die Verbundfolie unmittelbar nach dem Beschichten unterhalb der Schmelztemperatur_Ts kalandriert wird und dabei abgekühlt wird. Das Gewährleistet nicht nur einen langsamen und gezielten Abkühlprozess sondern auch ein Glätten der Verbundfolie. Die Kalanderwalzen können hierzu entsprechend temperiert sein.

Hierbei kann es von Vorteil sein, wenn die Oberfläche der Verbundfolie geprägt und/oder gefärbt wird. Mit einem Prägemuster können die Eigenschaften der Verbundfolie hinsichtlich der Formbarkeit und Steifigkeit weiter optimiert werden. Durch das Einprägen von Sollknickstellen werden Formbarkeit und Steifigkeit beeinflusst. Durch das Prägen von flächigen Strukturen erhält die Verbundfolie mehrdimensionale Versteifungen, die dem Werkstoff eine allseitig höhere Biegeund Beulsteifigkeit verleihen. Vorteilhaft sind dabei Wabenmuster mit einer symmetrischen Anordnung der Falten.

Zudem kann durch Prägemuster die Rutschhemmung und das Fliesverhalten von aufgebrachten Stoffen, bei der späteren Verwendung beeinflusst bzw. optimiert werden.

Weitere Vorteile und Einzelheiten der Erfindung sind in den Patentansprüchen und in der Beschreibung erläutert und in den Figuren dargestellt. Es zeigen
- Figur 1: eine Prinzipsskizze einer Verbundfolie;
- Figur 2: eine Prinzipsskizze einer anderen Verbundfolie;
- Figur 3: eine Prinzipsskizze einer weiteren Verbundfolie;
- Figur 4, 4a: ein vergrößerter Ausschnitt des Gemischs.

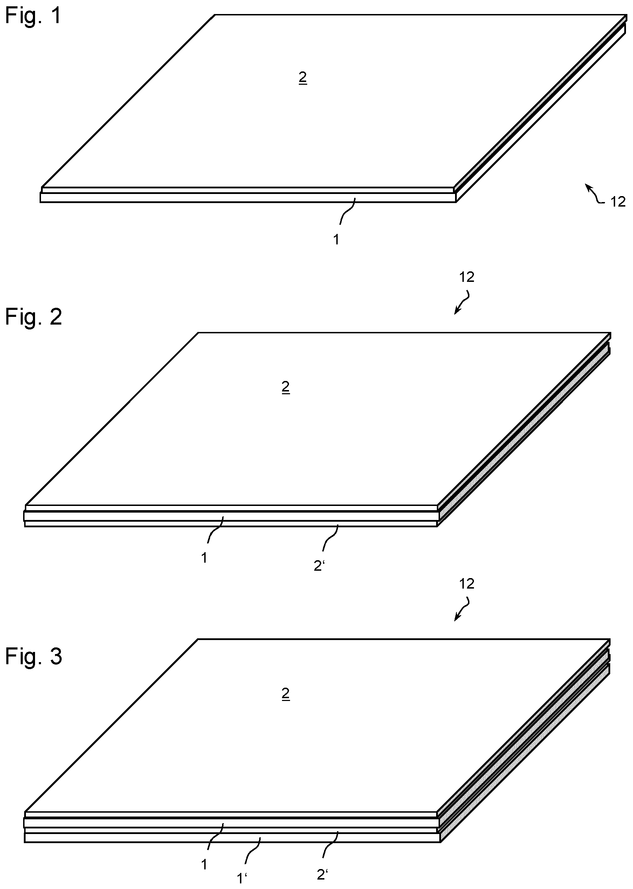

Nach Ausführungsbeispiel Figur 1 weist die Verbundfolie 12 zwei Lagen auf, eine Basis-Lage 1 aus Bio-Kunststoff und eine Deck-Lage 2. Die Deck-Lage 2 ist eine Wachs- oder Wachs-Faser-Mischung und wurde im erwärmten Zustand auf die Basis-Lage 1 aufgetragen. Die Dicke der Deck-Lage 2 liegt dabei zwischen 0,1 mm und 1,0 mm. Die Haftung der Deck-Lage auf der Basis-Lage ist rein physikalischer Natur und basiert auf zwischenmolekularen Kräften ebenso wie auf Haltekräften durch Formschlüsse zwischen der Oberfläche der Basis-Lage und dem erstarrten Wachs der Deck-Lage. Dabei findet der Beschichtungsauftrag der Wachs-Faser-Mischung mit einer Auftragstemperatur statt, die oberhalb des Schmelzpunktes Ts des Wachses liegt. Die Beschichtung erfolgt mit einer Temperatur der Deck-Lage oberhalb einer Glasübergangstemperatur Tg der Basis-Lage, mit 55°C <= Tg <=60 °C. Eine Temperierung der Basis-Lage ist weniger relevant. Kann aber auch angepasst werden.

Nach Ausführungsbeispiel Figur 2 weist die Verbundfolie 12 drei Lagen auf, eine Basis-Lage 1 aus Bio-Kunststoff und zwei Deck-Lagen 2, 2'. Beide Deck-Lagen 2, 2' sind Außenlagen, mithin auf gegenüberliegenden Seiten der Basis-Lage 1 aufgetragen.

Nach Ausführungsbeispiel Figur 3 weist die Verbundfolie 12 vier Lagen auf, zwei Basis-Lagen 1, 1' aus Bio-Kunststoff und zwei Deck-Lagen 2, 2'. Dabei sind die Deck-Lage 2 und die Basis-Lage 1' Außenlagen.

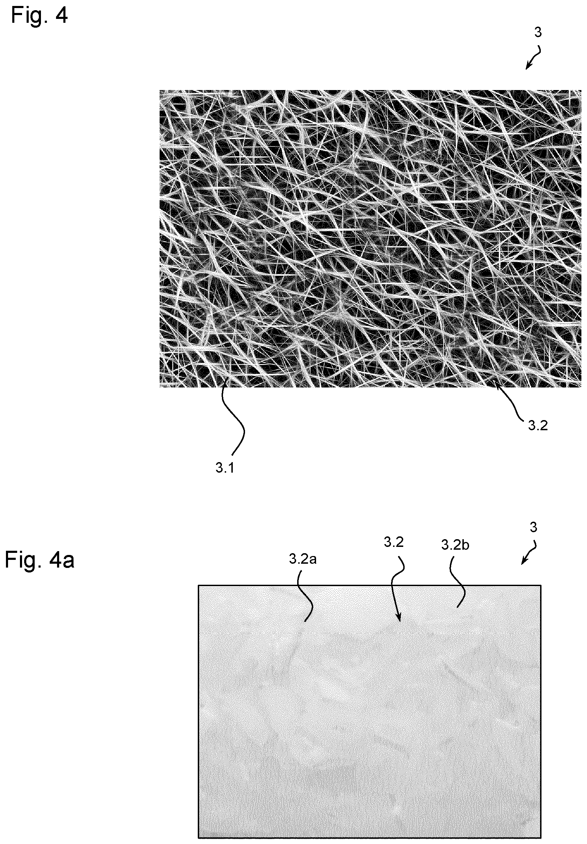

Wie nach Figur 4 vergrößert dargestellt, besteht das Gemisch 3 aus Pflanzenfasern 3.1 und Wachs 3.2. Die Pflanzenfasern 3.1 sind mit dem geschmolzenen Wachs 3.2 vermischt. Teile der Pflanzenfasern 3.1 sind als helle Linien zu erkennen. Das Wachs 3.2 ist der dunkle Teil.

Üblich bei der Erstellung von Faserverbundwerkstoffen Faservolumenanteil von max. 60%. Demzufolge ist ein Matrixvolumenanteil von 40 % geeignet. Höhere Faseranteile sind unvorteilhaft, da dann die Fasern in der Regel so dicht liegen, dass nicht mehr alle von der Matrix benetzt werden.

Nach Figur 4a besteht das Gemisch 3 (vergrößert dargestellt) aus verschiedenen Wachsen 3.2a, 3.2b ohne Pflanzenfasern. Die Wachse 3.2 sind farblich nicht zu unterscheiden.

### Bezugszeichenliste

- 1: Basis-Lage
- 1': weitere Basis-Lage
- 1.1: erste Seite
- 1.2: zweite Seite
- 2: Deck-Lage, Außenlage
- 2': weitere Deck-Lage, Zwischenlage
- 3: Gemisch
- 3.1: Pflanzenfaser
- 3.2: Wachs
- 3.2a: Wachs 1
- 3.2b: Wachs 2
- 12: Verbundfolie

Nomenklatur:
Schmelztemperatur_Tb der Basis-Lage
Glasübergangstemperatur_Tg der Basis-Lage
Schmelzpunkt_Ts von Wachs
Faserlänge_Lc = kritische Faserlänge der Pflanzenfasern

## Patentansprüche

1. Mindestens zweilagige Verbundfolie (12) bestehend aus:
- einer Basis-Lage (1) aus Bio-Kunststoff und
- mindestens einer Deck-Lage (2), die auf mindestens eine erste Seite (1.1) der Basis-Lage (1) aufgebracht ist,
**dadurch gekennzeichnet, dass**
die mindestens eine Deck-Lage (2) ein Gemisch (3) aus verschiedenen Wachsen (3.2) ist oder
ein Gemisch (3) aus mindestens einem Wachs (3.2) und Pflanzenfasern (3.1) ist, wobei das jeweilige Wachs und/oder der Bio-Kunststoff aus nachwachsenden Rohstoffen besteht und/oder biologisch abbaubar ist.

2. Verbundfolie nach Anspruch 1,
**dadurch gekennzeichnet, dass** der Bio-Kunststoff ein PP oder ein biobasiertes Polyester, wie PLA, PHA, PET, PTT oder ein biobasiertes Polyamide, wie PA 11, PA10-10 ist.

3. Verbundfolie nach Anspruch 1 oder 2,
**dadurch gekennzeichnet, dass** der Bio-Kunststoff als Vlies, als Gitter, als Netz oder als Folie ausgebildet ist.

4. Verbundfolie nach Anspruch 1, 2 oder 3,
**dadurch gekennzeichnet, dass** die Basis-Lage (1) eine Schmelztemperatur_Tb aufweist und das Wachs (3.2) einen Schmelzpunkt_Ts aufweist, mit Tb > Ts.

5. Verbundfolie nach einem der vorgehenden Ansprüche,
**dadurch gekennzeichnet, dass** die Basis-Lage (1) ergänzend zu der ersten Seite (1.1) auch auf einer zweiten Seite (1.2) eine Deck-Lage (2) aufweist.

6. Verbundfolie nach einem der vorgehenden Ansprüche,
**dadurch gekennzeichnet, dass** mindestens eine weitere Basis-Lage (1, 1') und mindestens eine weitere Deck-Lage (2, 2') vorgesehen sind, wobei zwischen zwei benachbarten Basis-Lagen (1, 1') jeweils eine als Zwischenlage ausgebildete weitere Deck-Lage (2') vorgesehen ist.

7. Verbundfolie nach Anspruch 6,
**dadurch gekennzeichnet, dass** mindestens eine Außenlage eine Deck-Lage (2, 2') ist.

8. Verbundfolie nach einem der vorgehenden Ansprüche,
**dadurch gekennzeichnet, dass** die Deck-Lage (2) eine Dicke von 0,05 mm bis 1 mm oder 0,1 mm bis 1 mm aufweist.

9. Verbundfolie nach einem der vorgehenden Ansprüche,
**dadurch gekennzeichnet, dass** das jeweilige Wachs (3.2) ein mikrokristallines Wachs ist und/oder ein biologisch abbaubares Wachs ist und/oder ein natürliches Wachs ist.

10. Verbundfolie nach einem der vorgehenden Ansprüche,
**dadurch gekennzeichnet, dass** die Basis-Lage (1)
- ein spezifisches Gewicht von 10 g bis 80 g pro qm und
- eine Dicke zwischen 0,02 mm und 0,8 mm oder 0,05 mm und 0,6 mm aufweist.

11. Verbundfolie nach einem der vorgehenden Ansprüche,
**dadurch gekennzeichnet, dass**
die Pflanzenfasern eine Länge von 0,1 mm bis 2 mm.

12. Verfahren zum Herstellen einer Verbundfolie,
**dadurch gekennzeichnet, dass**
- ein Gemisch (3) aus verschiedenen Wachsen (3.2) oder ein Gemisch (3) aus Pflanzenfasern (3.1) und mindestens einem Wachs (3.2) hergestellt wird;
- eine Basis-Lage (1) aus Bio-Kunststoff mit einer Schmelztemperatur Tb sowie das Gemisch (3) auf eine Auftragstemperatur Ta erhitzt werden, mit Ta < Tb;
- die Basis-Lage (1) im erhitzten Zustand mit dem Gemisch (3) im erhitzten Zustand beschichtet wird;
- die so hergestellte Verbundfolie (12) unmittelbar nach dem Beschichten abgekühlt wird;
- das Herstellungsverfahren der Verbundfolie (12) unmittelbar nach dem Abkühlen abgeschlossen wird.

13. Verfahren nach Anspruch 11, **dadurch gekennzeichnet, dass** die Verbundfolie (12) unmittelbar nach dem Beschichten unterhalb der Schmelztemperatur_Ts kalandriert wird und dabei abgekühlt wird.

14. Verfahren nach Anspruch 12 oder 13,
**dadurch gekennzeichnet, dass** die Oberfläche der Verbundfolie (12) geprägt und/oder gefärbt wird.
→ mit spezifischen Prägemuster kann die Eigenschaften der Verbundfolie hinsichtlich der Formbarkeit und Steifigkeit weiter optimieren, ist aber nicht zwingend nötig.

15. Verwendung einer mindestens zweilagigen Verbundfolie (12) bestehend aus einer Basis-Lage (1) aus Bio-Kunststoff und mindestens einer Deck-Lage (2), die auf mindestens eine erste Seite (1.1) der Basis-Lage (1) aufgebracht ist als plastisch formbare und knitterbare Folie
- als Schutzhülle für Waren oder
- zum Einpacken von Waren
- als Ersatz für Aluminiumfolie.

16. Verwendung nach Patentanspruch 14 oder Verfahren nach einem der Ansprüche 11 bis 13, wobei ein Bio-Kunststoff, wie ein PP oder ein biobasiertes Polyester, wie PLA, PHA, PET, PTT oder ein biobasiertes Polyamide, wie PA 11, PA10-10 Anwendung findet, in Form eines Gitters, eines Netzes, eines Vlieses und/oder einer Folie.
